# EUROPÄISCHE PATENTSCHRIFT

(11) **EP 1 517 610 B1**
(45) Veröffentlichungstag und Bekanntmachung des Hinweises auf die Patenterteilung: **23.04.2008**
(21) Anmeldenummer: 03760602.7
(22) Anmeldetag: 11.06.2003
(51) Int. Cl.: A01N 43/88

(54) **FUNGIZIDE WIRKSTOFFKOMBINATION**
FUNGICIDAL COMBINATION OF ACTIVE SUBSTANCES
COMBINAISON DE SUBSTANCES ACTIVES FONGICIDES

(30) Priorität: 24.06.2002 DE 10228104
(43) Veröffentlichungstag der Anmeldung: 30.03.2005
(73) Patentinhaber: Bayer CropScience AG, 40789 Monheim (DE)
(72) Erfinder: WACHENDORFF-NEUMANN, Ulrike, 56566 Neuwied (DE); MAULER-MACHNIK, Astrid, 42799 Leichlingen (DE); HEINEMANN, Ulrich, 42799 Leichlingen (DE); JAUTELAT, Manfred, 51399 Burscheid (DE)
(86) Internationale Anmeldenummer: PCT/EP2003/006106
(87) Internationale Veröffentlichungsnummer: WO 2004/000022

(56) Entgegenhaltungen:
- WO-A-98/47367

## Beschreibung

Die vorliegende Erfindung betrifft eine neue Wirkstoffkombination, die zwei bekannte Oximether-Derivate einerseits und ein bekanntes Hydroxyethyl-triazol-Derivat andererseits enthält und sehr gut zur Bekämpfung von phytopathogenen Pilzen geeignet ist.

Es ist bereits bekannt, dass das Oxim-Derivat 2-[α-{[(α-Methyl-3-trifluoromethylbenzyl)imino]oxy}-o-tolyl]-glyoxylsäure-methylester-O-methyloxim fungizide Eigenschaften besitzt (vgl. EP-A-0 460 575). Die Wirksamkeit dieses Stoffes ist gut, lässt aber bei niedrigen Aufwandmengen in manchen Fällen zu wünschen übrig. Die Herstellung dieser Verbindung ist ebenfalls aus EP-A-0 460 575 bekannt.

Ferner ist bekannt, dass das Hydroxyethyl-triazol-Derivat 2-[2-(1-Chlorcyclopropyl)-3-(2-chlorphenyl)-2-hydroxypropyl]-2,4-dihydro[1,2,4]triazol-3-thion fungizide Eigenschaften besitzt (vgl. WO 96/16048). Die Wirksamkeit dieses Stoffes ist gut; sie lässt jedoch bei niedrigen Aufwandmengen in manchen Fällen zu wünschen übrig. Die Herstellung dieser Verbindung ist ebenfalls aus WO 96/16048 bekannt.

Es ist außerdem bekannt, dass das Oxim-Derivat 3-[1-[2-(4-<2-Chlorphenoxy>-5-fluorpyrimid-6-yloxy)-phenyl]-1-(methoximino)-methyl]-5,6-dihydro-1,4,2-dioxazin fungizide Eigenschaften besitzt (vgl. DE-A-196 02 095). Die Wirksamkeit dieses Stoffes ist gut, sie lässt jedoch bei niedrigen Aufwandmengen in manchen Fällen zu wünschen übrig. Die Herstellung dieser Verbindung ist ebenfalls aus DE-A-196 02 095 bekannt.

Es wurde nun gefunden, dass die neue Wirkstoffkombination, die 2-[α-{[(α-Methyl-3-trifluoromethyl-benzyl)imino]oxy}-o-tolyl] -glyoxylsäure-methylester-O-methyloxim der Formel (I) 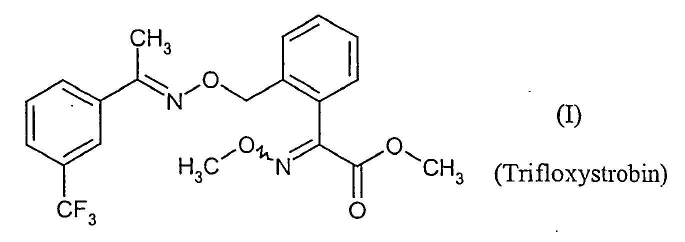 und
(1) 2-[2-(1-Chlorcyclopropyl)-3-(2-chlorphenyl)-2-hydroxypropyl]-2,4-dihydro[1,2,4]triazol-3-thion (Referenz: WO 96/16048) der Formel (II) 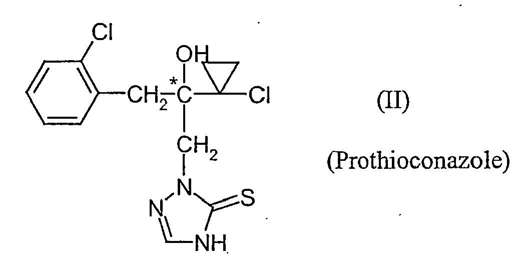 und
(2) 3-[1-[2-(4-<2-Chlorphenoxy>-5-fluorpyrimid-6-yloxy)-phenyl]-1-(methoximino)-methyl]-5,6-dihydro-1,4,2-dioxazin (Referenz: DE-A-196 02 095) der Formel (III) 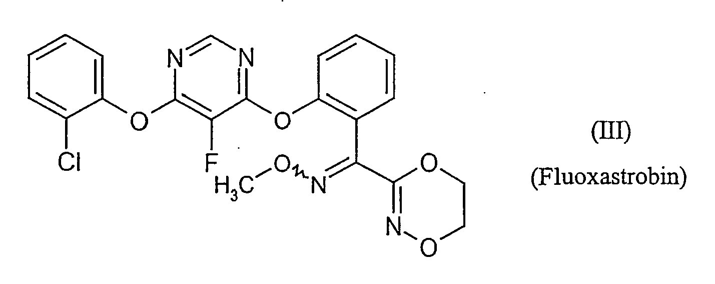 enthält, sehr gute fungizide Eigenschaften besitzt.

Überraschendeweise ist die fungizide Wirkung der erfindungsgemäßen Wirkstoffkombination wesentlich höher als die Summe der Wirkungen der einzelnen Wirkstoffe. Es liegt also ein nicht vorhersehbarer, echter synergistischer Effekt vor und nicht nur eine Wirkungsergänzung.

Der Wirkstoff der Formel (I) ist bekannt (vgl. z. B. EP-A-460 575). Die Wirkstoffe der Formeln (II) und (III) sind ebenfalls bekannt (vgl. angegebene Referenzen).

Aus der Strukturformel für den Wirkstoff der Formeln (I) und (III) ist ersichtlich, dass die Verbindungen als E- oder Z-Isomer vorliegen können. Die Verbindungen (I) und (III) können daher als Gemisch von verschiedenen Isomeren oder auch in Form eines einzigen Isomeren vorliegen. Bevorzugt sind Verbindungen der Formeln (I) und (III), in denen die Verbindungen der Formeln (I) und (III) als E-Isomer vorliegen.

Aus der Strukturformel für den Wirkstoff der Formel (II) ist ersichtlich, dass die Verbindung als (-)- oder als (+)-Enantiomer vorliegen kann. Die Verbindung (II) kann daher als Racemat oder auch in Form eines einzigen Enantiomeren vorliegen. Bevorzugt ist die Verbindung der Formel (II), in der das Racemat vorliegt.

Unter dem (-)-Enantiomeren ist hier jeweils dasjenige Enantiomere zu verstehen, das die Schwingungsebene von linear polarisiertem Licht der Natrium-D-Linie nach links dreht. Aus DE-A- 199 17 617 ist ein Verfahren zur Herstellung des (-)-Enantiomeren bekannt.

Das Hydroxyethyl-triazol-Derivat der Formel (II) kann außerdem in der "Thiono"-Form der Formel 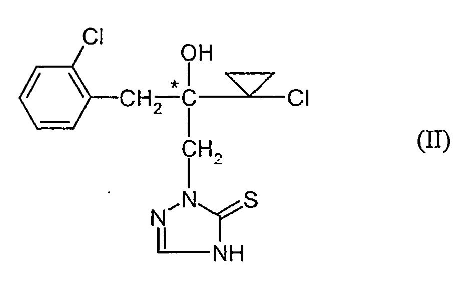 oder in der tautomeren "Mercapto"-Form der Formel 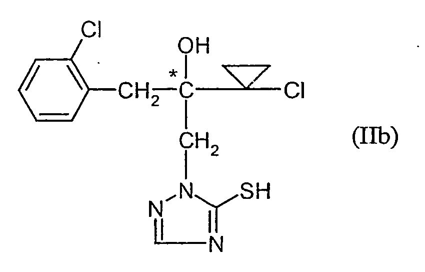 vorliegen. Der Einfachheit halber wird jeweils nur die "Thiono"-Form aufgeführt.

Die erfindungsgemäße Wirkstoffkombination enthält die Wirkstoffe der Formeln (I), (II) und (III). Sie kann darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden.

Im Allgemeinen entfallen auf 1 Gew.-Teil an Wirkstoff der Formel (I)
0,1 bis 10 Gew.-Teile, vorzugsweise 0,2 bis 5 Gew.-Teile an Wirkstoff der Formel (II),
und
0,1 bis 10 Gew.-Teile, vorzugsweise 0,2 bis 5 Gew.-Teile an Wirkstoff der Formel (III).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäße Wirkstoffkombination eignet sich besonders gut zur Bekämpfung von Getreidekrankheiten, wie Erysiphe, Cochliobolus, Pyrenophora, Rhynchosporium, Septoria, Fusarium, Pseudocercosporella und Leptosphaeria und zur Bekämpfung von Pilzbefall an Nichtgetreidekulturen wie Wein, Obst, Erdnuss, Gemüse, beispielsweise Phythophthora, Plasmopara, Pythium sowie Echte Mehltaupilze wie zum Beispiel Sphaerotheca oder Uncinula und Blattfleckenerreger wie Venturia, Altemaria und Septoria sowie Rhizoctonia, Botrytis, Sclerotinia und Sclerotium.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und geniechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alhylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im Allgemeinen zwischen 0,1 und 95 Gew.-% Wirkstoffe, vorzugsweise zwischen 0,5 und 90 %.
Die erfindungsgemäßen Wirkstoffkombinationen können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Auch eine Mischung mit anderen bekannten Wirkstoffen, wie Herbiziden oder mit Düngemitteln und Wachstumsregulatoren ist möglich.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im Allgemeinen zwischen 0,1 und 10 000 g/ha, vorzugsweise zwischen 10 und 1 000 g/ha. Bei der Saatgutbehandlung liegen die Aufwandmengen an Wirkstoffkombination im Allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im Allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.
Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die Erfindung wird durch die folgenden Beispiele veranschaulicht.

### Beispiel 1

### Pyrenophora teres-Test (Gerste) kurativ

| | |
|---|---|
| Lösungsmittel: | 25 Gewichtsteile N,N-Dimethylacetamid |
| Emulgator: | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf kurative Wirksamkeit werden junge Pflanzen mit einer KonidienSuspension von Pyrenophora teres besprüht. Die Pflanzen verbleiben 48 Stunden bei 20°C und 100 % relativer Luftfeuchtigkeit in einer Inkubationskabine. Anschließend werden die Pflanzen mit der Wirkstoffzubereitung in der angegebenen Aufwandmenge besprüht.

Die Pflanzen werden in einem Gewächshaus bei einer Temperatur von ca. 20°C und relativen Luftfeuchtigkeit von ca. 80 % aufgestellt.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

**Tabelle 1 Pyrenophora teres-Test (Gerste) / kurativ**

| **Wirkstoff** | **Aufwandmenge an Wirkstoff in g/ha** | **Wirkungsgrad in %** |
|---|---|---|
| Bekannt: | | |
| 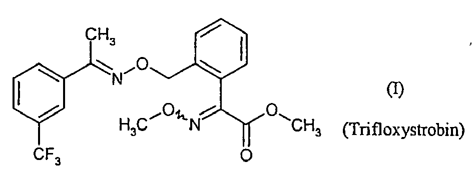 | 100 | 56 |
| 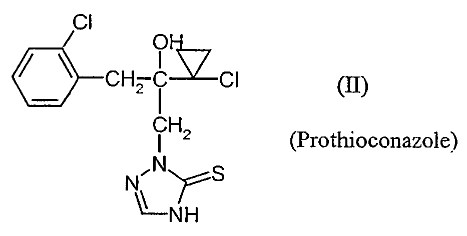 | 100 | 56 |
| 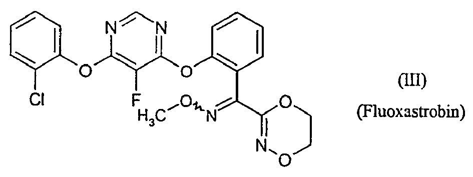 | 100 | 67 |

| Erfindungsgemäße Mischung (1:2:1) | | |
|---|---|---|
| (I) | 25 | |
| (II) | 50 | 78 |
| (III) | 25 | |

## Patentansprüche

1. Wirkstoffkombination, enthaltend eine Verbindung der Formel (I) 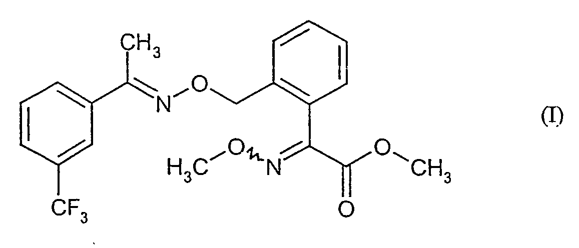 und
(1) eine Verbindung der Formel (II) 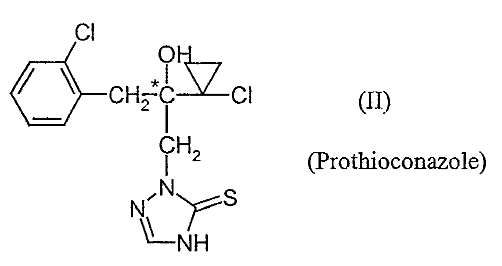 und
(2) eine Verbindung der Formel (III)

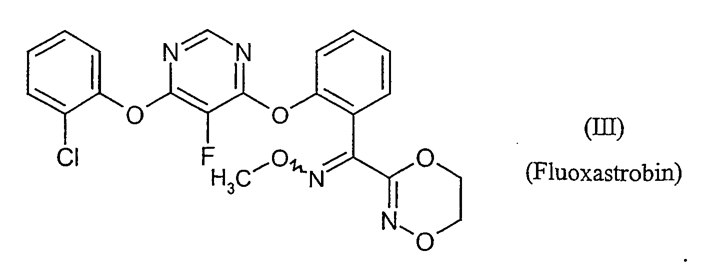

2. Wirkstoffkombination gemäß Anspruch 1, **dadurch gekennzeichnet, dass** in der Wirkstoffkombination das Gewichtsverhältnis von Wirkstoff der Formel (I) zu
- Wirkstoff der Formel (II) 1:0,1 bis 1:10 beträgt, und zu
- Wirkstoff der Formel (III) 1:0,1 bis 1:10 beträgt.

3. Verfahren zur Bekämpfung von Pilzen, **dadurch gekennzeichnet, dass** man eine Wirkstoffkombination wie in Anspruch 1 definiert auf die Pilze, deren Lebensraum oder die von ihnen freizuhaltenden Pflanzen, Pflanzenteile, Samen, Böden, Flächen, Materialien oder Räume einwirken lässt.

4. Verfahren gemäß Anspruch 3, **dadurch gekennzeichnet dass** man die Verbindung (I) gemäß Anspruch 1, die Verbindung (II) gemäß Anspruch 1 und die Verbindung (III) gemäß Anspruch 1 gleichzeitig gemeinsam oder getrennt oder nacheinander ausbringt.

5. Vermehrungsmaterial, das nach einem Verfahren gemäß Anspruch 3 behandelt wurde.

6. Fungizide Mittel, enthaltend einen Gehalt an einer Wirkstoffkombination wie in Anspruch 1 definiert.

7. Verwendung der Wirkstoffkombination bzw. Mittel wie in den Ansprüchen 1, 2 und 6 defniert zur Bekämpfung von Pilzen.

8. Verfahren zur Herstellung von fungiziden Mitteln, **dadurch gekennzeichnet, dass** man eine Wirkstoffkombination gemäß Anspruch 1 mit Streckmitteln und/oder oberflächenaktiven Stoffen vermischt.

## Claims

1. Active substance combination, containing a compound of the formula (I) 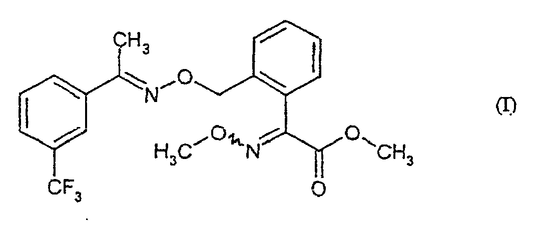 and
(1) a compound of the formula (II) 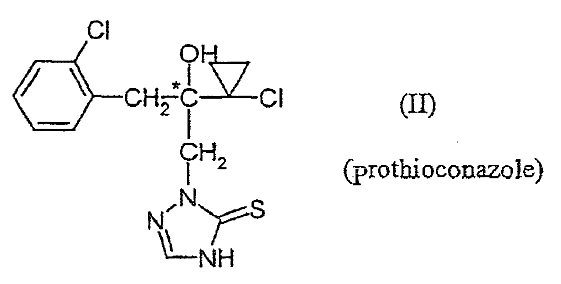 and
(2) a compound of the formula (III)

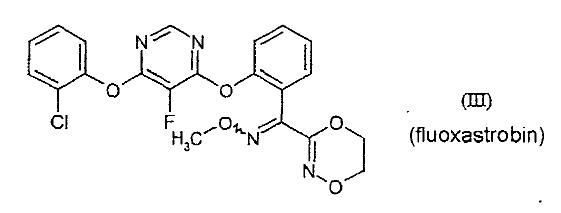

2. Active substance combination according to Claim 1, **characterized in that**, in the active substance combination, the weight ratio of active substance of the formula (I) to
- active substance of the formula (II) is 1:0.1 to 1:10, and to
- active substance of the formula (III) 1:0.1 to 1:10.

3. Method of controlling fungi, **characterized in that** an active substance combination as defined in Claim 1 is allowed to act on the fungi, their environment or on the plants, plant parts, seeds, soils, areas, materials or spaces to be kept free from them.

4. Method according to Claim 3, **characterized in that** the compound (I) according to Claim 1, the compound (II) according to Claim 1 and the compound (III) according to Claim 1 are applied simultaneously together or separately or in succession.

5. Propagation material which was treated according to a method according to Claim 3.

6. Fungicidal compositions containing a content of an active substance combination as defined in Claim 1.

7. Use of the active substance combination or compositions as defined in Claims 1, 2 and 6 for controlling fungi.

8. Method for the preparation of fungicidal compositions, **characterized in that** an active substance combination according to Claim 1 is mixed with extenders and/or surface-active substances.

## Revendications

1. Combinaison de substances actives, contenant un composé de la formule (I) 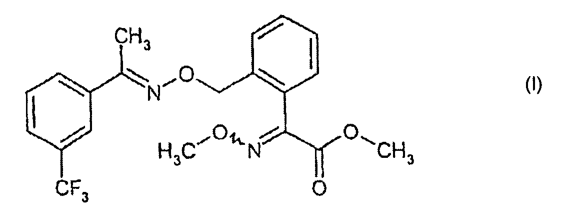 et
(1) un composé de la formule (II) 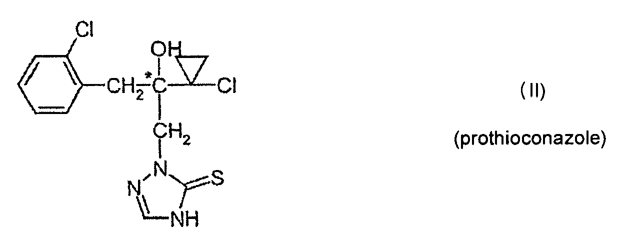 et
(2) un composé de la formule (III)

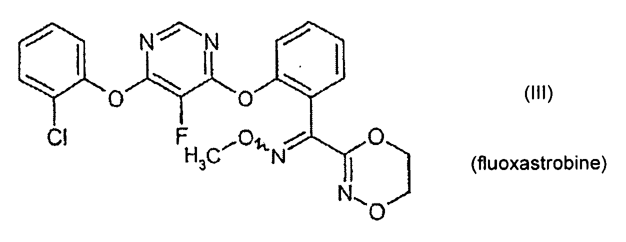

2. Combinaison de substances actives selon la revendication 1, **caractérisée en ce que** dans celle-ci, le rapport pondéral entre la substance active de la formule (I)
et la substance active de la formule (II) est compris entre 1:0,1 et 1:10
et la substance active de la formule (III) est compris entre 1:0,1 et 1:10.

3. Procédé destiné à combattre les champignons, **caractérisé en ce que** l'on fait agir une combinaison de substances actives, telle qu'elle est définie dans la revendication 1, sur les champignons, leur espace vital ou les plantes, les parties de plantes, les semences, les sols, les surfaces, les matériels ou les espaces à protéger de ceux-ci.

4. Procédé selon la revendication 3, **caractérisé en ce que** l'on applique simultanément ensemble ou séparément, ou successivement, le composé (I) selon la revendication 1, le composé (II) selon la revendication 1 et le composé (III) selon la revendication 1.

5. Matériel de propagation qui a été traité selon un procédé conforme à la revendication 3.

6. Fongicides contenant une combinaison de substances actives, telle qu'elle est définie dans la revendication 1.

7. Utilisation de la combinaison de substances actives ou des fongicides, tels qu'ils sont définis dans les revendications 1, 2 et 6, pour combattre les champignons.

8. Procédé de production de fongicides, **caractérisé en ce que** l'on mélange une combinaison de substances actives selon la revendication 1 avec des extendeurs et/ou des substances tensioactives.
